# EUROPÄISCHE PATENTSCHRIFT

(11) **EP 0 804 765 B1**
(45) Veröffentlichungstag und Bekanntmachung des Hinweises auf die Patenterteilung: **16.12.1998**
(21) Anmeldenummer: 96900959.6
(22) Anmeldetag: 16.01.1996
(51) Int. Cl.: G06F 13/42

(54) **FEHLERERKENNUNG UND FEHLERBESEITIGUNG BEI EINEM SERIELLEN DATENBUSSYSTEM**
ERROR DETECTION AND ERROR ELIMINATION IN A SERIAL DATA BUS SYSTEM
PROCEDE DE DETECTION ET D'ELIMINATION D'ERREURS DANS UN SYSTEME DE BUS DE DONNEES SERIE

(30) Priorität: 21.01.1995 DE 19501800
(43) Veröffentlichungstag der Anmeldung: 05.11.1997
(73) Patentinhaber: ZF FRIEDRICHSHAFEN Aktiengesellschaft, 88038 Friedrichshafen (DE)
(72) Erfinder: BAIER, Eberhard, D-88048 Friedrichshafen (DE); ESCHRICH, Gerhard, D-88069 Tettnang (DE); HORSAK, Günther, D-88048 Friedrichshafen (DE); RUNGE, Wolfgang, D-88214 Ravensburg (DE)
(86) Internationale Anmeldenummer: EP9600150
(87) Internationale Veröffentlichungsnummer: WO9622572

(56) Entgegenhaltungen:
- EP-A- 0 051 332
- EP-A- 0 628 915
- US-A- 4 468 734

## Beschreibung

Die Erfindung betrifft ein Verfahren zur Fehlererkennung und Fehlerbeseitigung bei einem seriellen Datenbussystem mit Master- und Slave-Anordnung, vorzugsweise I²C-Bus, mit einem Mikro-Controller als Master und mindestens einem Teilnehmer, z. B. E²Prom, als Slave.

Beim I²C-Bus mit einer Master- und Slave-Anordnung sind Master und Slave über eine Zweidrahtschnittstelle miteinander verbunden. Über die Signalleitung SCL überträgt der Master einen seriellen Takt an den Slave. Die Signalleitung SDA ist bidirektional, d. h., der Master überträgt Informationen an den Slave bzw. vice versa. Ein typischer Vertreter für den Master ist zum Beispiel der 80C517 der Firma Siemens. Ein typischer Vertreter für den Slave ist ein E²Prom, Typ 24LC16B, wie er im Datenbuch der Firma Microchip Technology Inc., Veröffentlichungsjahr 1993, Seiten 6-41 bis 6-48, beschrieben ist. Ebenfalls hieraus ersichtlich ist die Spezifikation für den I²C-Bus und für die Übertragungsprotokolle.

Bei der beschriebenen Konfiguration wird der Master durch ein Reset in seinen Ausgangszustand zurückgeführt. Der Reset wirkt nur auf den Master. Üblicherweise wird ein Reset ausgelöst, wenn eine Überwachungsfunktion (Watch-Dog) zum Beispiel einen Fehler im Programmablauf feststellt. Der Reset kann somit zu jedem beliebigen Zeitpunkt während des Übertragungsprotokolls erfolgen. Erfolgt nun ein Reset zu dem Zeitpunkt, wenn der Slave den Empfang von Daten oder Adressen quittiert (Acknowledge) oder wenn der Slave ein Datenbit mit Pegel LOW sendet, so tritt folgender Fehler auf: die Signalleitung SCL steht auf HIGH, Signalleitung SDA steht auf LOW, wegen des dominanten Pegels des Slave. Der Slave erkennt somit eine zu einem späteren Zeitpunkt vom Master neu ausgegebene Start-Bedingung nicht. Infolgedessen treten beim weiteren Übertragungsprotokoll Fehler auf.

Die Erfindung hat somit zur Aufgabe, bei einem seriellen Datenbus eine fehlerfreie Datenübertragung nach einem Reset zu gewährleisten.

Die Aufgabe wird erfindungsgemäß gelöst durch ein Verfahren gemäß Anspruch 1 zur Fehlererkennung und -beseitigung bei einem seriellen Datenbussystem mit Master- und Slave-Anordnung, vorzugsweise I²C-Bus mit einem Mikro-Controller als Master und mindestens einem Teilnehmer, z. B. E²Prom, als Slave, Master und Slave sind über eine Zweidrahtverbindung miteinander verbunden, wobei die Signalleitung SCL einen seriellen Takt vom Master an den Slave und die Signalleitung SDA bidirektional Informationen überträgt. Der Master beginnt die Informationsübertragung mit einer Start-Bedingung, gefolgt von einem Control-Byte und einem Schreib-/ Lese-Bit. Der Slave quittiert den Empfang durch ACK (Acknowledge). Der Master beendet die Informationsübertragung mit einer Stop-Bedingung. Der Master wird durch ein Reset in seinen Ausgangszustand zurückgeführt, wobei im Ausgangszustand am Ausgang des Masters für die Signalleitungen SCL und SDA ein HIGH-Pegel ausgegeben wird, ein Fehler erkannt wird, wenn die Signalleitung SDA nach einem Reset LOW-Pegel aufweist und der Fehler beseitigt wird, indem der Master auf der Signalleitung SCL einen einzelnen Takt-Impuls oder mehrere Takt-Impulse ausgibt, um den Slave in einen empfangsbereiten Zustand zu versetzen.

In einer Ausgestaltung hierzu wird vorgeschlagen, daß nach einem Reset im Master eine Unterroutine beginnt, an deren Anfang ein Zähler auf einen Anfangswert gesetzt und eine Zählschleife durchlaufen wird. Bei jedem Durchlauf wird ein Takt-Impuls für die Signalleitung SCL erzeugt. Bei jedem Durchlauf wird der Zählerinhalt um Eins dekrementiert und der Zustand der Signalleitung SDA geprüft.

Die erfindungsgemäße Lösung bietet den Vorteil, daß durch den Takt-Impuls der Eingangspuffer des E²Prom um einen Takt weitergeschoben und der Acknowledge-Zustand beendet wird.

In einer Ausgestaltung der Erfindung wird vorgeschlagen, daß die Unterroutine verlassen und eine Diagnoseeinrichtung aktiviert wird, wenn der Zählerinhalt zu Null dekrementiert ist und die Signalleitung SDA immer noch einen LOW-Pegel aufweist. In einer Ausgestaltung hierzu wird weiter vorgeschlagen, daß die Diagnoseeinrichtung einen Fehlereintrag in einem Fehlerspeicher bewirkt und eine Ersatzfunktion aktiviert.

Hierdurch wird der Vorteil erzielt, daß ein Kurzschluß gegen das Bezugspotential (Masseschluß) sicher erkannt wird. Über den Eintrag in einem Fehlerspeicher läßt sich die Fehlerbedingung jederzeit abrufen.

In den Zeichnungen ist ein Ausführungsbeispiel dargestellt.
Es zeigen:
- Fig. 1: Schema einer Master-Slave-Anordnung;
- Fig. 2: einen Lesefehler;
- Fig. 3: einen ersten Schreibfehler;
- Fig. 4: einen zweiten Schreibfehler und
- Fig. 5: Ablaufplan.

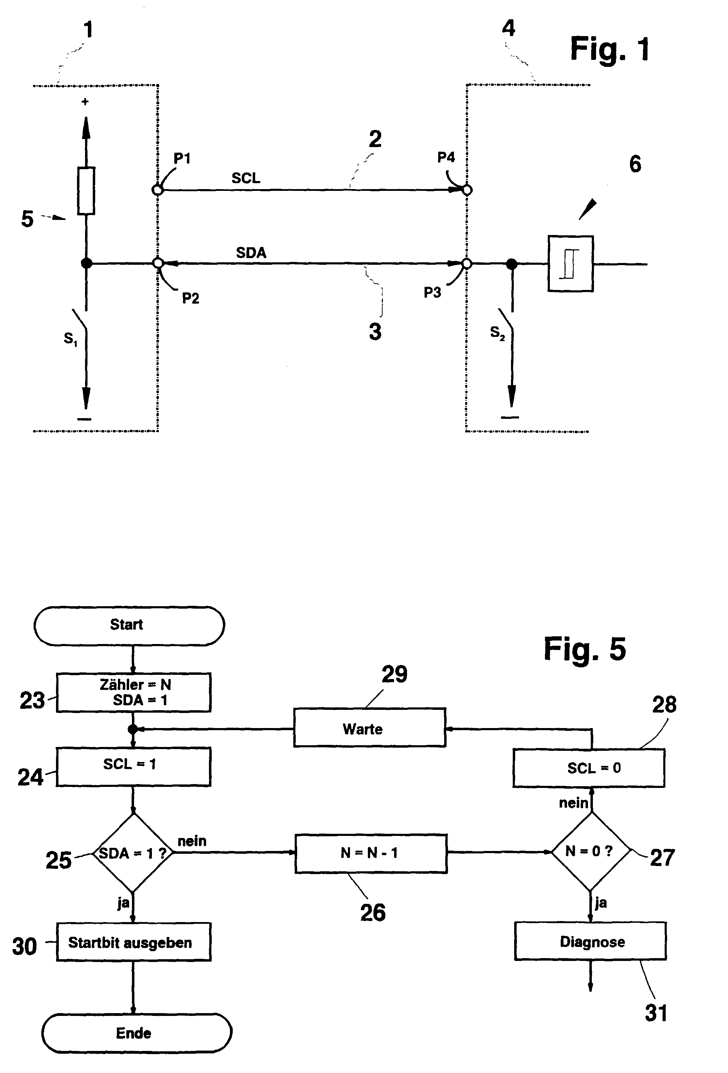

Fig. 1 zeigt eine schematische Darstellung einer Master- und Slave-Anordnung. Mit Bezugszeichen 1 ist der Master bezeichnet und mit Bezugszeichen 4 der Slave. Master 1 und Slave 4 sind über eine Signalleitung 2, Kurzbezeichnung SCL, und eine Signalleitung 3, Kurzbezeichnung SDA, verbunden. Über die Signalleitung SCL überträgt der Master 1 den seriellen Takt an den Slave 4. Über die Signalleitung SDA 3 werden Informationen vom Master 1 an den Slave 4 bzw. umgekehrt übertragen. Der Master 1 besitzt eine Ausgangsstufe 5, bestehend aus einem Pullup und einem Halbleiterschalter S₁ gegen Bezugspotential. Zwischen dem Pullup und dem Halbleiterschalter S₁ führt ein Abzweig auf den Ausgangspin P2. Ist der Halbleiterschalter S₁ offen, besitzt der Pin P2 somit das gleiche Potential wie die Versorgungsspannung (+). Bei geschlossenem Schalter S₁ besitzt der Pin P2 Bezugspotential (-). Der Slave 4 hat eine Eingangsstufe 6, bestehend aus einem Halbleiterschalter S₂ gegen Bezugspotential und einer Logikschaltung, zum Beispiel Schmitt-Trigger oder einem logischen Gatter. Das Potential des Pin P3 wird durch die Stellung des Halbleiterschalters S₂ bestimmt. Bei geöffnetem Schalter S₂ besitzt der Pin P3 das gleiche Potential wird der Pin P2. Bei geschlossenem Schalter S₂ liegt der Pin P3 auf Bezugspotential (-). Über diesen Schalter S₂ quittiert der Slave 4 auf der Signalleitung SDA 3 den Empfang von Adressen oder Daten, Kurzbezeichnung ACK (Acknowledge) und sendet Daten an den Master. Der Master 1 wiederum erkennt anhand des Potentials des Pin P2 das Acknowledge des Slave 4 oder den Pegel eines vom Slave gesendeten Datenbits.

Bei einem Reset setzt der Master 1 die Signalleitung SCL 2 und die Signalleitung SDA 3 auf HIGH, d. h., das Potential der beiden Pins P1 und P2 entspricht dem Potential der Versorgungsspannung. Nach dem Reset beginnt der Master 1 mit der Start-Bedingung. Die Start-Bedingung besteht darin, daß SCL = HIGH und SDA von HIGH nach LOW übergeht. Danach beginnt der Master 1 mit der Adreß- bzw. Datenübertragung.

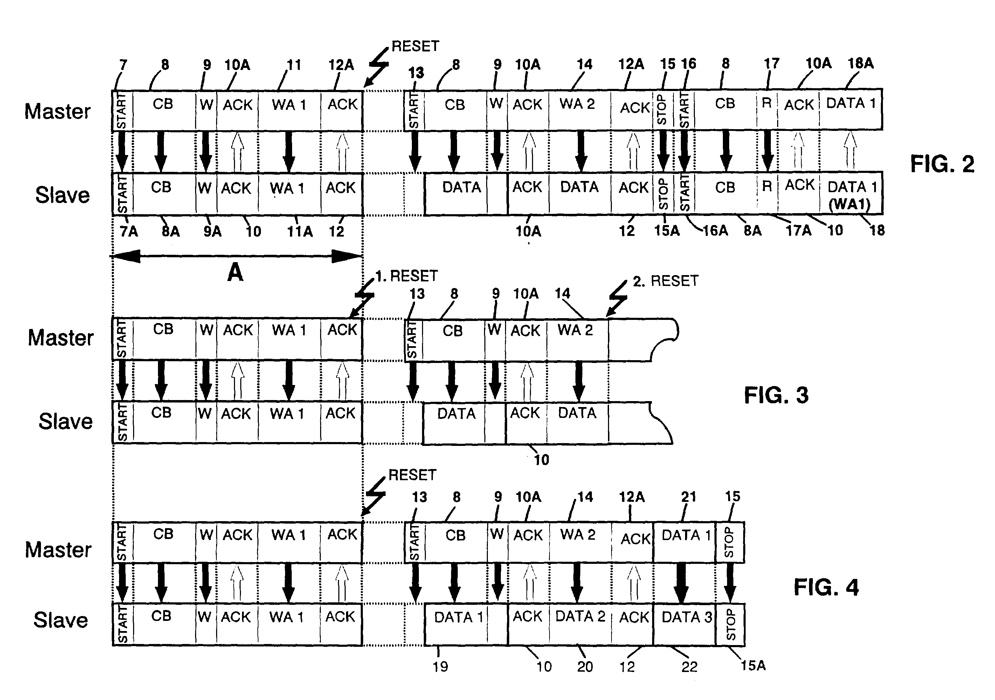

Die Fig. 2 bis 4 zeigen drei mögliche, auftretende Fehler nach einem Reset bei einem I²C-Bus mit Master und Slave nach dem Stand der Technik.

Fig. 2 zeigt die zeitliche Abfolge, die zu einem Lesefehler führt. Die obere Reihe zeigt hierbei die Information des Masters, die untere Reihe zeigt die Information des Slave. Die Pfeile zwischen der oberen und unteren Reihe geben jeweils die Informationsrichtung auf der Signalleitung SDA an. Der Ablauf ist folgendermaßen: der Master gibt eine Start-Bedingung 7 an den Slave aus. Die Start-Bedingung besteht darin, daß SCL = HIGH und SDA von HIGH auf LOW übergeht. Der Slave erkennt die Startbedingung 7A. Danach sendet der Master die Control-Bits CB, Bezugszeichen 8. Die Control-Bits bestehen aus einer 4 Bit breiten Ziffernfolge, die den Gerätetyp im I²C-Bus kennzeichnet, bei Speicherbausteinen üblicherweise 1-0-1-0, gefolgt von 3 Bits, die einen aus bis zu acht Slaves innerhalb des I²C-Bussystems oder einen bestimmten Bereich innerhalb eines einzigen Slaves auswählen. Der Slave erkennt die Control-Bits CB 8A. Nach den Control-Bits CB 8 sendet der Master einen Schreibbefehl W, Bezugszeichen 9. Mit dem Schreibbefehl W 9 gibt der Master an, daß die Informationen, die der Master als nächstes über die Signalleitung SDA schickt, in den Slave geschrieben werden sollen. Der Schreibbefehl W 9 wird als LOW-Potential vom Master ausgegeben. Der Slave erkennt den Schreibbefehl W, Bezugszeichen 9A. Danach quittiert der Slave den Empfang, Bezeichnung ACK, Bezugszeichen 10, indem der Slave die Signalleitung SDA auf LOW hält. Der Master erkennt die Bestätigung des Slave, Bezugszeichen 10A. Danach sendet der Master ein Adressen-Byte WA1, Bezugszeichen 11. Der Slave überträgt das Adressen-Byte WA1 in seinen Adreßspeicher, Bezugszeichen 11A. Danach quittiert der Slave den Empfang, indem er wieder die Signalleitung SDA auf LOW-Potential hält, Befehl ACK, Bezugszeichen 12. Der Master erkennt das Bestätigungssignal, Bezugszeichen 12A. In Fig. 2 ist dieser Ablauf von der Start-Bedingung 7 bis zum Acknowledge 12A als Block A bezeichnet. Wird nun bei Ausgabe des Befehls ACK, Signalleitung SDA = LOW, ein Reset ausgelöst, so wird der Master auf den beiden Signalleitungen SCL und SDA einen HIGH-Pegel ausgeben. Da aber auf der Signalleitung SCL ein HIGH-Pegel anliegt, behält der Slave seinen letzten Zustand bei. Dies bedeutet, daß der Slave im ACK-Modus verbleibt. Dies hat zur Folge, daß die Signalleitung SDA 3 auf LOW-Potential verbleibt, da der Halbleiterschalter S₂ gegen Bezugs-Potential geschlossen ist. Der Slave behält diesen ACK-Modus bei, bis auf der Signalleitung SCL ein Übergang von LOW nach HIGH auftritt. Nach dem Reset gibt der Master ein Leseprotokoll aus, beginnend mit der Start-Bedingung, Bezugszeichen 13. Der Slave verharrt immer noch im ACK-Modus. Danach sendet der Master die Control-Bits CB, Bezugszeichen 8, und das Schreib-Bit W 9. Da der Slave die Start-Bedingungen nicht erkannt hat, interpretiert der Slave die Control-Bits CB 8 und das Schreib-Bit W 9 als Datenwert. Danach ist der Ablauf folgendermaßen: Bestätigung durch Slave, Befehl ACK, mit Bezugszeichen 10 bzw. 10A, dann Adressen-Byte WA2, Bezugszeichen 14, mit anschließender Bestätigung durch den Slave, Bezugszeichen 12 bzw. 12A. Nach der Bestätigung gibt der Master eine Stop-Bedingung aus, Bezugszeichen 15. Die Stop-Bedingung besteht darin, daß die Signalleitung SCL ein HIGH-Potential hat und die Signalleitung SDA einen LOW-HIGH-Übergang aufweist.

Mit Bezugszeichen 16 gibt der Master eine neue Start-Bedingung aus. Der Slave erkennt die Start-Bedingung, Bezugszeichen 16A. Danach gibt der Master die Control-Bits CB, Bezugszeichen 8, aus. Daran folgt ein Lese-Bit R, Bezugszeichen 17. Der Slave erkennt das Lese-Bit R, Bezugszeichen 17A. Der Slave bestätigt den Empfang, Bezugszeichen 10, und sendet danach den Inhalt der Adresse WA1, Bezugszeichen 18.

Der Lesefehler besteht somit darin, daß der Slave nach dem Reset die Start-Bedingung 13 nicht erkennt. Infolgedessen erkennt der Slave ebenfalls das Adressen-Byte WA2 14 nicht. Im Adreß-Register des Slave ist immer noch das Adressen-Byte WA1 11 gültig. Deswegen sendet der Slave nach dem Schreib-Bit R, Bezugszeichen 17 bzw. 17A, den Inhalt der Adresse WA1 (anstatt den Inhalt der Adresse WA2).

Fig. 3 zeigt einen ersten Schreibfehler. Dieser Schreibfehler tritt ebenfalls dann auf, wenn während des ACK-Modus 12 ein Reset auftritt. Die zeitlich vor dem Reset liegenden Befehle entsprechen dem Funktionsblock A aus Fig. 2, so daß auf eine erneute Schilderung verzichtet wird. Die zeitlich nach dem ersten Reset liegenden Blöcke Start-Bedingung 13, Control-Bits CB 8, Schreib-Bit W 9 und Bestätigung ACK 10 bzw. 10A entsprechen ebenfalls der Beschreibung aus Fig. 2. Tritt nun während der Übertragung des Adreß-Byte WA2, Bezugszeichen 14, ein zweiter Reset auf und ist das zu diesem Zeitpunkt übertragene Bit eine logische Null, so entsteht eine nicht gewollte Stop-Bedingung. Nach Erkennen der Stop-Bedingung beginnt der Slave, den Inhalt der Adresse WA1 mit dem Datenwert, dies entspricht den Control-Bits CB 8 und dem Schreib-Bit W 9, zu überschreiben.

Der Fehler besteht somit darin, daß der Slave nach dem ersten Reset die Start-Bedingung 13 nicht erkennt und das Control-Byte CB 8 als Datenwert verwendet und diesen nach dem zweiten Reset unter der Adresse WA1 abspeichert (anstatt ein Leseprotokoll auszuführen).

Fig. 4 zeigt einen zweiten Schreibfehler. Der Funktionsblock A entspricht dem aus Fig. 2. Der Master gibt nach dem Reset ein Schreibprotokoll aus, mit dem die Adresse WA2 beschrieben werden soll. Das Schreibprotokoll beginnt mit der Start-Bedingung 13, gefolgt von den Control-Bits CB 8. Der Slave findet die Start-Bedingung nicht und interpretiert die Control-Bits CB 8 zusammen mit dem Schreib-Bit W 9 als Datenwert 1, Bezugszeichen 19. Nach dem ACK, Bezugszeichen 10 bzw. 10A, sendet der Master ein Adressen-Byte WA2, Bezugszeichen 14. Dieses versteht der Slave als Datenwert 2, Bezugszeichen 20, und bestätigt dies. Danach sendet der Master ein Daten-Byte, Bezugszeichen 21, welches der Slave als Daten-Byte 3, Bezugszeichen 22, versteht. Gibt nun der Master eine Stop-Bedingung aus, so beginnt der Slave, den Inhalt der Adresse WA1 mit dem Inhalt des Daten-Byte, Bezugszeichen 19, zu überschreiben. Den Inhalt der Adresse WA1+1 überschreibt der Slave mit dem Daten-Byte 2, Bezugszeichen 20, der Inhalt der Adresse WA1+2 wird mit Data 1 überschrieben usw. Dies entspricht dem im Datenbuch von Microchip Technology Inc., Seite 6-46, beschriebenen Page Write.

Weitere Fehler, ähnlich zu den oben beschriebenen, können auftreten, wenn der (erste) Reset zu dem Zeitpunkt auftritt, wenn das E²Prom ein Datenbit mit LOW-Pegel ausgibt: Die Startbedingung eines nach dem Reset vom Master ausgegebenen Protokolls wird vom Slave nicht erkannt.

Fig. 5 zeigt einen Ablaufplan. Durch die Ausführung der Befehle in diesem Ablaufplan werden die in Fig. 2 bis 4 genannten Fehler erkannt und beseitigt. Das Programm beginnt bei Bezugszeichen 23, indem ein Zähler auf einen Anfangswert N und die Signalleitung SDA auf HIGH-Potential, logisch Eins, gesetzt wird. Danach wird bei Bezugszeichen 24 die Signalleitung SCL ebenfalls auf HIGH-Potential gesetzt. Bei Bezugszeichen 25 wird geprüft, ob die Signalleitung SDA auf logisch Eins, HIGH-Potential, liegt. Diese Abfrage ist nur dann negativ, wenn der Slave 4 sich im ACK-Modus befindet oder ein Datenbit mit logisch Null ausgibt und somit der Halbleiterschalter S₂ geschlossen ist. Ist dies der Fall, so wird der Zählerinhalt um Eins verringert, Bezugszeichen 26, und geprüft, ob der Zählerinhalt Null ist, Bezugszeichen 27. Ist der Zähler noch nicht Null, so wird bei Bezugszeichen 28 die Signalleitung SCL auf LOW-Pegel gesetzt, gefolgt von einem Warteblock 29. Beim Durchlaufen dieser Schleife wird somit für die Signalleitung SCL ein HIGH-LOW-HIGH-Impuls erzeugt. Durch diesen Impuls wird bewirkt, daß der Slave 4 seinen ACK-Modus verläßt bzw. das nächste Datenbit ausgibt. Besitzt dieses Datenbit wiederum LOW-Pegel, so muß die Schleife nochmals durchlaufen werden. Da nach der Ausgabe von 8 Bits der Slave die SDA-Leitung wieder freigibt (HIGH-Pegel ausgibt), muß die Schleife höchstens achtmal durchlaufen werden, bevor der Master die Startbedingung ausgeben kann, außer im Kurzschlußfall. Die Zählschleife besitzt zwei Ausgänge. Der erste Ausgang ist bei Bezugszeichen 25, wenn die Prüfung der Signalleitung SDA einen HIGH-Pegel ergibt. Dies bedeutet, daß die Signalleitungen SCL und SDA auf HIGH-Potential liegen, so daß der Master eine Start-Bedingung ausgeben und der Slave dieses korrekt erkennen kann, Bezugszeichen 30. Der zweite Ausgang ist bei Bezugszeichen 27, wenn die Prüfung ergibt, daß die Signalleitung SDA immer noch auf Bezugs-Potential liegt und die Zählschleife N-mal durchlaufen wurde. Dies ist dann der Fall, wenn ein Kurzschluß gegen Bezugs-Potential, Masseschluß, vorliegt. Als Folge hiervon wird die Diagnoseeinrichtung 31 aktiviert. In der Diagnoseeinrichtung 31 wird der zuvor festgestellte Fehler in einem Fehlerspeicher abgelegt und eine Ersatzfunktion gestartet. Durch diese Ersatzfunktion kann zum Beispiel der Slave 4 desaktiviert werden.

Die einzuhaltenden Zeitbedingungen für die Ausgabe von Impulsen auf der Signalleitung SCL 2 und der Startbedingung sind im Ablaufplan nicht explizit angegeben.

### Bezugszeichen

- 1: Master
- 2: Signalleitung SCL
- 3: Signalleitung SDA
- 4: Slave
- 5: Ausgangsstufe
- 6: Eingangsstufe
- 7: Start-Bedingung
- 7A: Start-Bedingung
- 8: Control-Bits
- 8A: Control-Bits
- 9: Schreib-Bit W
- 9A: Schreib-Bit W
- 10: ACK-Modus, quittieren
- 10A: ACK-Modus, quittieren
- 11: Adressen-Byte WA1
- 11A: Adressen-Byte WA1
- 12: ACK-Modus, quittieren
- 12A: ACK-Modus, quittieren
- 13: zweite Start-Bedingung
- 14: Adressen-Byte WA2
- 15: Stop-Bedingung
- 15A: Stop-Bedingung
- 16: Start-Bedingung
- 16A: Start-Bedingung
- 17: Lese-Bit
- 17A: Lese-Bit
- 18: Inhalt Adresse WA1
- 19: Datenwert 1
- 20: Datenwert 2
- 21: Datenwert 1
- 22: Datenwert 3
- 23: Befehlsfolge
- 24: Befehlsfolge
- 25: Programmverzweigung
- 26: Befehlsfolge
- 27: Programmverzweigung
- 28: Befehlsfolge
- 29: Befehlsfolge
- 30: Start-Bedingung ausgeben
- 31: Diagnoseeinrichtung

- S₁: Halbleiterschalter 1
- S₂: Halbleiterschalter 2

## Patentansprüche

1. Verfahren zur Fehlererkennung und Fehlerbeseitigung bei einem seriellem Datenbussystem, vorzugsweise I²C-Bus, mit einem Mikro-Controller als Master (1) und mindestens einem weiteren Teilnehmer als Slave (4), wobei Master (1) und Slave (4) über eine Zweidrahtverbindung miteinander verbunden sind, die Zweidrahtverbindung bestehend aus einer Signalleitung SCL (2) und einer Signalleitung SDA (3), wobei die Signalleitung SCL (2) einen seriellen Takt vom Master (1) an den Slave (4) überträgt, die Signalleitung SDA (3) bidirektional Informationen überträgt, der Master (1) die Informationsübertragung beginnt mit einer Start-Bedingung (7, 13, 16), gefolgt von einem Control-Byte CB (8) und einem Schreib- (9) oder LeseBit (17), der Slave (4) den Empfang durch ein ACK Signal in Form eines LOW-Pegels auf der Signalleitung SDA quittiert, der Master (1) die Informationsübertragung beendet mit einer Stop-Bedingung (15), dadurch **gekennzeichnet**, daß nach jedem Reset des Masters (1) eine Unterroutine durchlaufen wird, die Unterroutine prüft ob die Signalleitung SDA (3) einen HIGH-Pegel (SDA=1) aufweist, ein Fehler erkannt wird, wenn die Signalleitung SDA (3) einen LOW-Pegel (SDA=0) aufweist und der Fehler eliminiert wird indem die Unterroutine eine Schleife durchläuft durch die ein HIGH-LOW-HIGH Impuls auf der Signalleitung SCL (2) erzeugt wird, wobei die Schleife solange durchlaufen wird, bis die Signalleitung SDA (3) einen HIGH-Pegel (SDA=1) aufweist.

2. Verfahren nach Anpruch 1, dadurch **gekennzeichnet**, daß bei Erkennen eines HIGH-Pegels auf der Signalleitung SDA (3) die Unterrroutine verlassen wird und der Master (1) mit der Start-Bedingung (7, 13, 16) fortfährt.

3. Verfahren nach Anpruch 1, dadurch **gekennzeichnet**, daß zu Beginn der Unterroutine ein Zähler auf einen Anfangswert gesetzt und bei jedem Duchlauf der Schleife der Zählerinhalt um Eins dekrementiert wird.

4. Verfahren nach Anspruch 3, dadurch **gekennzeichnet**, daß die Unterroutine verlassen und ein Diagnoseeinrichtung (31) aktiviert wird, wenn der Zählerinhalt zu Null dekrementiert ist und die Signalleitung SDA (3) immernoch einen LOW-Pegel (SDA=0) aufweist.

5. Verfahren nach Anspruch 4, dadurch **gekennzeichnet**, daß in der Diagnoseeinrichtung (31) ein Fehlereintrag in einen Fehlerspeicher erfolgt und ein Ersatzprogramm aktiviert wird.

## Claims

1. Method for error detection and error elimination in a serial data bus system, preferably an I²C bus, with a micro controller as master (1) and at least a further participant as slave (4), master (1) and slave (4) being connected to one another via a two-wire connection, the two-wire connection comprising a signal line SCL (2) and a signal line SDA (3), the signal line SCL (2) transmitting a serial pulse from the master (1) to the slave (4), the signal line SDA (3) transmitting bidirectional information, the master (1) starting the information transmission with a start condition (7, 13, 16), followed by a control byte CB (8) and a write bit (9) or read bit (17), the slave (4) acknowledging receipt by an ACK signal in the form of an LCW level in the signal line SDA, the master (1) ending the information transmission with a stop condition (15), characterised in that after each reset of the master (1), a subroutine is run through, the subroutine examines whether the signal line SDA (3) has a HIGH level (SDA=1), an error is detected if the signal line SDA (3) has a LOW level (SDA=0) and the error is eliminated in that the subroutine runs through a loop, by means of which a HIGH-LOW-HIGH pulse is generated in the signal line SCL (2), the loop running until the signal line SDA (3) has a HIGH level (SDA=1).

2. Method according to claim 1, characterised in that, with the detection of a HIGH level in the signal line SDA (3), the subroutine is abandoned and the master (1) continues with the start condition (7, 13, 16).

3. Method according to claim 1, characterised in that at the start of the subroutine a counter is set to an initial value and the counter reading is decremented by one with each run of the loop.

4. Method according to claim 3, characterised in that the subroutine is abandoned and a diagnosing device (31) is actuated if the counter reading is decremented to zero and the signal line SDA (3) continues to have a LOW level (SDA=0).

5. Method according to claim 4, characterised in that in the diagnosing device (31) an error entry into an error store is effected and a substitute program is actuated.

## Revendications

1. Procédé pour la détection d'erreurs et l'élimination d'erreurs pour un système sériel de bus de données, de préférence un bus I²C, avec un micro-contrôleur (1) comme maître et au moins un autre terminal comme esclave (4), le maître (1) et l'esclave (4) étant reliés par une jonction à deux fils, la jonction à deux fils se composant d'une ligne de signaux SCL (2) et d'une ligne de signaux SDA (3), la ligne de signaux SCL (2) transmettant un cycle sériel du maître (1) à l'esclave (4), la ligne de signaux SDA (3) transmettant des informations de façon bidirectionnelle, le maître (1) commençant la transmission d'informations avec une condition de départ du cycle (7, 13, 16) suivie d'un multiplet de contrôle CB (8) et d'écriture (9) ou d'un bit de lecture (17), l'esclave (4) confirmant la réception par un signal ACK sous forme d'un niveau BAS sur la ligne des signaux SDA, le maître (1) terminant la transmission d'informations avec une condition d'arrêt (15), **caractérisé** en ce qu'après chaque remise à zéro du maître (1) un sous-programme est parcouru, le sous-programme vérifiant si la ligne des signaux SDA (3) présente un niveau HAUT (SDA = 1), une erreur étant détectée lorsque la ligne des signaux SDA (3) présente un niveau BAS (SDA = 0) et L'erreur étant éliminée du fait que le sous-programme passe par une boucle produisant une impulsion HAUT-BAS-HAUT sur la ligne des signaux SCL (2), la boucle étant parcourue jusqu'à ce que la ligne des signaux SDA (3) présente un niveau HAUT (SDA = 1).

2. Procédé selon la revendication 1, **caractérisé** en ce que lors de la détection d'un niveau HAUT sur la ligne des signaux SDA (3), le sous-programme est quitté et le maître (1) continue avec la condition de départ du cycle (7, 13, 16).

3. Procédé selon la revendication 1, **caractérisé** en ce qu'au début de sous-programme, compteur est réglé à une valeur initiale et le contenu du compteur est décrémenté d'une valeur de un à chaque passage par la boucle.

4. Procédé selon la revendication 3, **caractérisé** en ce que le sous-programme est quitté et une installation de diagnostic (31) est activée lorsque le contenu du compteur est décrémenté à zéro et que la ligne des signaux SDA (3) présente toujours un niveau BAS (SDA = 0)

5. Procédé selon la revendication 4, **caractérisé** en ce que, dans l'installation de diagnostic (31), une entrée d'erreur dans une mémoire d'erreurs est effectuée, et en ce qu'un programme de substitution est activé.
